(19) Europäisches Patentamt
European Patent Office
Office européen des brevets

(11) **EP 4 588 642 A1**

(12) **EUROPÄISCHE PATENTANMELDUNG**

(43) Veröffentlichungstag:
**23.07.2025  Patentblatt 2025/30**

(21) Anmeldenummer: **25150272.0**

(22) Anmeldetag: **05.01.2025**

(51) Internationale Patentklassifikation (IPC):
***B29C 48/92*** *(2019.01)*  ***B29C 45/76*** *(2006.01)*
***B29C 48/40*** *(2019.01)*

(52) Gemeinsame Patentklassifikation (CPC):
**B29C 48/40; B29C 45/76; B29C 48/92;**
B29C 2945/76187; B29C 2945/76511;
B29C 2948/92038; B29C 2948/92076;
B29C 2948/9239; B29C 2948/92533;
B29C 2948/92885

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **18.01.2024  AT 102024**

(71) Anmelder: **Pro2Future GmbH**
**4040 Linz (AT)**

(72) Erfinder:
• **Roland, Wolfrgang**
**4121 Altenfelden (AT)**
• **Berger-Weber, Gerald**
**8053 Graz (AT)**
• **Löw-Baselli, Bernhard**
**4320 Perg (AT)**
• **Prechtl, Maximilian**
**4485 Kronstorf (AT)**

(74) Vertreter: **Peham, Alois**
**Lederergasse 23/11/139**
**1080 Wien (AT)**

(54) **VERFAHREN ZUR BESTIMMUNG DES AXIALEN DREHMOMENTENVERLAUFES IN SCHNECKENEXTRUDERN**

(57)    Die Erfindung betrifft ein Verfahren zur Bestimmung des axialen Drehmomentenverlaufes in Extrudern, welche zumindest eine angetriebene Extruderschnecke (1) und einen dieselbe umgebenden Zylindermantel (2) umfasst, wobei mittels zumindest eines an einem Messpunkt an der Außenseite des Zylindermantels angebrachten Sensorelementes ($S_i$, $S_2$,... $S_n$) der Durchgang eines Schneckensteges an dem Messpunkt festgestellt wird und aus der zeitlichen Abfolge der Durchgänge die Verdrilling der Extruderschnecke am Messpunkt und daraus das anliegende Drehmoment bestimmt wird.

Der Verlauf der durch die Reibung eingebrachten Leistung über die Schneckenlänge ist eine wichtige Prozessgröße für die Optimierung des Extrusionsprozesses und der Anlagen.

Fig.1

**EP 4 588 642 A1**

**Beschreibung**

Die Erfindung betrifft ein Verfahren zur Messung des axialen Drehmomentenverlaufes in Schneckenextrudern.

Mit Extrudern werden feste bis zähflüssige Massen (Extrudate) unter Druck kontinuierlich durch eine formgebende Öffnung gepresst. Dabei entstehen Körper mit dem Querschnitt der Öffnung in theoretisch beliebiger Länge.

Bei Schneckenextrudern wird der Druck mittels Extruderschnecken erzeugt. Sie sind von einem Zylinder ummantelt, an dessen vorderem Ende sich vorzugsweise eine formgebende Auslassöffnung (Werkzeug) befindet. Am gegenüberliegenden, hinteren Ende des Zylinders befindet sich der Antrieb, in den meisten Fällen ein Elektromotor mit Getriebeeinheit, der für die Rotation der Schnecken sorgt.

Die zu verarbeitenden Materialien werden den Schnecken meist kontinuierlich über einen Trichter zugeführt.

Die Extruderschnecken haben verschiedenste Aufgaben, welche sich je nach Anwendungsgebiet unterscheiden können. Zu diesen Aufgaben gehören, das zu extrudierende Material zu fördern, zu plastifizieren bzw. aufzuschmelzen, zu homogenisieren und dieses durch eine Düse zu pumpen. Design und Anzahl der Extruderschnecken können je nach Anforderungen stark variieren.

Physikalisch betrachtet, werden Förderung und Druckaufbau durch die Reibung der mit der Schnecke rotierenden Masse an der stehenden Gehäusewand (Zylinder) bewirkt - man spricht in diesem Zusammenhang von Friktionsförderung. Die so in der Rotation zurückbleibende Masse wird von den wendelförmigen Schneckengängen zur Auslassdüse geschoben.

Der Verlauf der durch die Reibung eingebrachten Leistung über die Schneckenlänge ist eine wichtige Prozessgröße und bietet Antworten auf viele Detailfragen beispielsweise zu den Themen Schneckendesign, Prozesseinstellung, -regelung, Energiemanagement, Qualitäts- und Wartungsmanagement.

Als Grundlage zur Bestimmung der mechanischen Leistung kann der Verlauf des Drehmoments herangezogen werden.

Der Erfindung liegt die Aufgabe zugrunde, ein Verfahren anzugeben, mit dem der Verlauf des Drehmoments bestimmt werden kann.

Erfindungsgemäß geschieht dies mit einem Verfahren gemäß Anspruch 1.

Vorteilhafte Ausgestaltungen ergeben sich aus den Unteransprüchen.

Die Erfindung beruht auf der Erkenntnis, dass sich eine Extruderschnecke im Betrieb durch die aufgebrachte Torsionslast elastisch verdreht. Der Zusammenhang zwischen Drehmoment $M_t$ und der Verdrillung $d\varphi/dz$ ist durch folgenden Zusammenhang gegeben:

$$M_t = G\, I_t\, \frac{d\varphi}{dz} \;,$$

wobei G das Schubmodul, $I_t$ das Torsionsträgheitsmoment und z die axiale Koordinate (Drehachse) ist. Die Verdrillung $d\varphi/dz$ ist die Ableitung der Verdrehung $\varphi$ nach der axialen Koordinate z. Bei einem Doppelschneckenextruder kann jede Schnecke als ein eigener Torsionsstab betrachtet werden, welcher am Schaft fest mit dem Antrieb verbunden ist und am Extruderende freischwimmt. Durch die Bestimmung der lokalen Verdrillung kann auf das Drehmoment entsprechend der oben angeführten Gleichung geschlossen werden.

Bei sich ändernder Geometrie entlang der axialen Schneckenposition muss vorab das polare Flächenträgheitsmoment als Funktion der axialen Position ermittelt werden.

Dies kann beispielsweise durch eine statische FEM Analyse erfolgen, welche es auch ermöglicht, Schnecken zu untersuchen, bei denen die einzelnen Schneckenelemente auf einem Schaft platziert sind und beispielsweise mit einer Splineverbindung (Spline Shaft) mit dem Schaft verbunden sind.

Durch die Rotation der Schnecke im Extrusionsbetrieb erfolgt der Durchgang des Schneckensteges durch eine definierte Position am Zylindergehäuse in regelmäßigen Abständen. Die Frequenz f ist hier direkt proportional zur Drehzahl N und der Anzahl der Schneckenstege i. Für eingängige Schnecken ist die Frequenz gleich der Drehzahl, für mehrgängige Schnecken und jeweils gleich breiten Schneckengängen ist die Frequenz f gegeben durch:

$$f = i\,N.$$

Bei ungleich breiten Schneckengängen ist dies die Durchschnittsfrequenz, wobei der zeitliche Abstand zwischen den Stegsignalen direkt mit den Gangbreiten korreliert.

Die folgenden Erläuterungen beziehen sich auf den Spezialfall gleich breiter Schneckengänge, können aber durch entsprechende Berücksichtigung der zu erwartenden ungleichen Signalabstände auf ungleiche Schneckengänge erweitert werden.

Der Zeitpunkt, wann der Schneckensteg die Sensorposition am Zylindergehäuse passiert, kann mittels geeigneter Sensoren bestimmt werden, die unterschiedlichste physikalische Eigenschaften erfassen können.

Die Erfindung wird anhand von Figuren näher erläutert.

Es zeigen beispielhaft:

Fig. 1 schematisch einen Einschneckenextruder,
Fig. 2a, 2b schematisch einen Doppelschneckenextruder,
Fig.3a, 3b zeitliche Verläufe von Sensorsignalen.

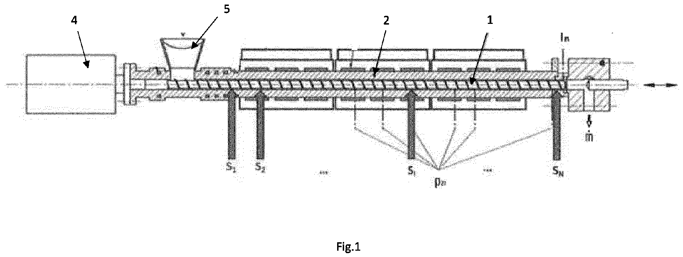

Der Extruder nach Figur 1 umfasst eine Extruderschnecke 1, die von einem Motor 4 über eine Getriebeeinheit in Rotation versetzt wird. Sie ist von einem Zylindermantel 2 umgeben, an dessen vorderem Ende sich die formgebende Auslassöffnung (Werkzeug) befindet. Am hinteren Ende befindet sich ein Einfülltrichter 5.

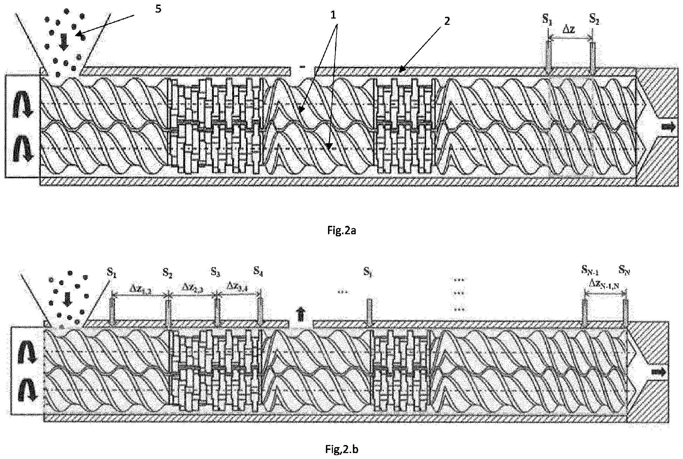

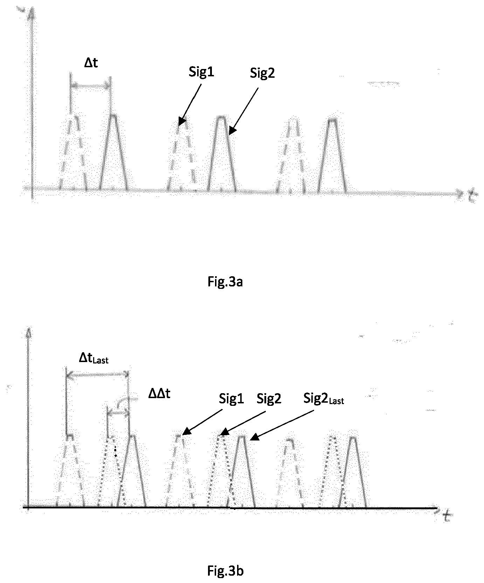

Erfindungsgemäß sind auf dem Zylindermantel 2 Sensorelemente $S_1$, $S_2$,... $S_n$ angebracht, die beispielsweise kapazitiv, induktiv, mittels Ultraschall oder mit anderen geeigneten Verfahren den Durchgang des Schneckenstegs durch den Messpunkt ermitteln und z.B. als elektrisches Signal Sig1, Sig2, $Sig2_{Last}$ darstellen, wie Fig.3a, 3b zeigen. Bei Einwirken einer Belastung auf die Schnecken durch den Widerstand des Extrudats kommt es wie bereits erläutert zu einer Deformation (Verdrillung) der Schnecken. Um diese Verdrillung über einen beliebigen Schneckenabschnitt zu ermitteln werden an Positionen entlang des Extruders die Sensoren mit einem definierten Abstand $\Delta z_{1,2}$ ... $\Delta z_{n-1,n}$ zueinander angebracht, wie es in Fig. 2 dargestellt ist. Dadurch kann die durchschnittliche Verdrillung im Schneckenabschnitt zwischen zwei Sensoren $S_{n-1}$ und $S_n$ ermittelt werden. Beide Sensoren liefern in diesem Fall ein Signal Sig1, Sig2, der Schneckenstegerkennung, wie es in Abbildung 3a exemplarisch in einem belastungsfreien Zustand dargestellt ist. Für ein Förderelement ergibt sich der zeitliche Versatz $\Delta t$ der beiden Schneckenstegsignale Sig1, Sig2, auf Grund der Frequenz f, der Schneckensteigung $t_s$, der Gangzahl i, sowie des Sensorabstandes $\Delta z$ gemäß

$$\Delta t = f \, \frac{mod \left( \frac{i \, \Delta z}{t_s} \right)}{t_s},$$

mit mod als dem Rest der ganzzahligen Division. Für andere Schneckenelemente kann beispielsweise eine äquivalente Steigung ermittelt werden, um den erwarteten zeitlichen Versatz zu bestimmen. Um mögliche Fertigungstoleranzen, oder Spiele zu kompensieren, ist es auch möglich den lastfreien zeitlichen Versatz $\Delta t$ für eine definierte Drehzahl im Leerlauf ohne Extrudat bzw. ohne zu transportierendes Material zu bestimmen.

Dieser lastfreie zeitliche Versatz kann mit folgendem Zusammenhang auf beliebige Drehzahlen umgerechnet werden:

$$\frac{\Delta t_1}{\Delta t_2} = \frac{N_2}{N_1}.$$

Im Extrusionsbetrieb mit der Belastung durch das zu transportierende Material kommt es zu einer lokalen Verdrillung bzw. Verdrehung der Schnecke, welche eine Funktion der axialen Position ist und somit an den beiden, durch den Abstand $\Delta z$ getrennten Messpositionen unterschiedliche Werte annimmt. Durch diese ungleiche Verdrehung der Schnecken an den beiden Messpositionen kommt es zu einer Änderung des zeitlichen Versatzes $\Delta t$ der Sensorsignale Sig1, Sig2, $Sig2_{Last}$, wie in Abbildung 3b dargestellt, zu $\Delta t_{Last}$.

Diese Veränderung des zeitlichen Versatzes $\Delta\Delta t$ ergibt sich als Differenz aus dem Belastungszustand mit dem Referenzzustand (belastungsfreier Zustand): $\Delta\Delta t = \Delta t_{Last} - \Delta t$.

Aus dieser Änderung des zeitlichen Versatzes kann mit Hilfe der Drehzahl und des Schneckendurchmessers (Gehäusedurchmesser D) auf eine Änderung der Bogenlänge $\Delta\Delta a$ geschlossen werden:

$$\Delta\Delta a = D \, \pi \, N \, \Delta\Delta t.$$

Diese Bogenlänge entspricht einer Verdrehung zwischen den beiden Messpositionen $S_1$ und $S_2$ von

$$\Delta\varphi = \frac{\Delta\Delta a \, 2}{D},$$

sowie einer durchschnittlichen Verdrillung von:

$$\varphi' = \frac{d\varphi}{dz} = \frac{\Delta\varphi}{\Delta z} = \frac{2 \, \pi \, N}{\Delta z} \, \Delta\Delta t,$$

welche direkt proportional zum durchschnittlichen Drehmoment an diesem Schneckenabschnitt ist. Es sei angemerkt, dass die Differenz $\Delta\Delta t$ in Abhängigkeit von der Schneckensteigung sowie der Wahl der Sensorpositionen $S_1$, $S_2$ positiv oder negativ sein kann.

Bei einer Verwendung von mehr als zwei Sensoren $S_1$, $S_2$,... $S_n$ ist es auch denkbar, einen davon als Referenz zu nehmen und und die anderen auf diesen zu beziehen. Dabei erhält man zunächst an diskreten Punkten die Verdrehung. Diese Verdrehung kann in weiterer Folge durch eine Funktion wie z.B. ein Polynom approximiert werden und die Ableitung davon ergibt dann kombiniert mit dem Verlauf des polaren Flächenmoments 2ter Ordnung den Drehmomentenverlauf.

Fig. 2a und 2b zeigen Doppelschneckenextruder, die zwei Schneckenwellen 1 aufweisen, die ineinandergreifend in einem Zylinder 2 mit achtförmiger Bohrung liegen. Die Schnecken werden einseitig gelagert und werden über Keilwellenverbindungen oder Passfederverbindung mit der Getriebestufe verbunden.

Doppelschneckenextruder sind in ihrer Herstellung wesentlich teurer als Einschneckenextruder, haben aber deutlich bessere Mischwirkung und sehr gute selbstreinigende Eigenschaften.

Beim Betrieb eines Doppelschneckenextruders kann es vorkommen, dass die beiden Schnecken 1 ungleich belastet sind. Um die ungleiche Belastung zu identifizieren, werden erfindungsgemäß an beiden Schnecken jeweils zumindest zwei Sensoren $S_1$, $S_2$,... $S_n$ angebracht, wie dies in Fig. 2b dargestellt ist.

Bei Anbringung der Sensoren $S_1$, $S_2$,... $S_n$ an denselben axialen Positionen ist ein Vergleich der Drehmomente möglich.

Bezugszeichenliste

| | |
|---|---|
| 1 | Extruderschnecke |
| 2 | Zylindermantel |
| $S_1, S_2,... S_n$ | Sensorelement |
| 4 | Motor |
| 5 | Einfülltrichter |
| $\Delta t, \Delta t_{last}$ | zeitlicher Versatz der Sensorsignale |
| $\Delta z$ | Sensorabstand |
| Sig1, Sig2, Sig2_{Last} | Sensorsignale |

**Patentansprüche**

1. Verfahren zur Bestimmung des axialen Drehmomentenverlaufes in Extrudern, welche zumindest eine angetriebene Extruderschnecke und einen dieselbe umgebenden Zylindermantel umfasst, **dadurch gekennzeichnet, dass** mittels zumindest eines an einem Messpunkt an der Außenseite des Zylindermantels (2) angebrachten Sensorelementes ($S_1, S_2,... S_n$) der Durchgang eines Schneckensteges an dem Messpunkt festgestellt wird und aus der zeitlichen Abfolge der Durchgänge die Verdrilling der Extruderschnecke (1) am Messpunkt und daraus das anliegende Drehmoment bestimmt wird.

2. Verfahren nach Anspruch 1, **dadurch gekennzeichnet, dass** mehrere Messpunkte vorgesehen sind und die zeitlichen Abläufe der Durchgänge des Schneckensteges an den Messpunkten ermittelt und für die Bestimmung der Verdrilling der Extruderschnecke (1) und des Drehmoments herangezogen werden.

3. Verfahren nach Anspruch 1 oder 2, **dadurch gekennzeichnet, dass** der Extruder als Doppelschneckenextruder ausgeführt ist.

4. Verfahren nach einem der Ansprüche 1 bis 3, **dadurch gekennzeichnet, dass** als Sensorelemente ($S_1, S_2,... S_n$) Ultraschallsensoren vorgesehen sind.

5. Verfahren nach einem der Ansprüche 1 bis 3, **dadurch gekennzeichnet, dass** als Sensorelemente ($S_1, S_2,... S_n$) kapazitive Sensoren vorgesehen sind.

6. Verfahren nach einem der Ansprüche 1 bis 3, **dadurch gekennzeichnet, dass** als Sensorelemente kapazitive Sensoren vorgesehen sind.

7. Verfahren nach einem der Ansprüche 1 bis 6, **dadurch gekennzeichnet, dass** die Bestimmung des Drehmoments aus der Verdrillung der Extruderschnecke gemäß

$$M_t = G\, I_t\, \frac{d\varphi}{dz}$$

erfolgt.

8. Verfahren nach Anspruch 3, **dadurch gekennzeichnet, dass** bei einem Doppelschneckenextruder mittels Sensorelementen ($S_1, S_2,... S_n$) an beiden Extruderschnecken (1) die Differenz der Drehmomente bestimmt wird.

9. Vorrichtung zur Durchführung des Verfahrens nach einem der Ansprüche 1 bis 7, **dadurch gekennzeichnet, dass** an einem Zylindermantel (2) eines Extruders zumindest ein Sensorelement ($S_1, S_2,... S_n$) zur Bestimmung des Durchganges eines Schneckensteges an dem Messpunkt festgestellt wird und dass Mittel zur Bestimmung der Verdrilling der Extruderschnecke (2) am Messpunkt des Drehmoments und des anliegenden Drehmoment vorgesehen sind.

Fig.1

Fig.2a

Fig,2.b

Fig.3a

Fig.3b

**Europäisches Patentamt**
**European Patent Office**
**Office européen des brevets**

# EUROPÄISCHER RECHERCHENBERICHT

Nummer der Anmeldung

EP 25 15 0272

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2002/146475 A1 (COLLINS THOMAS ROBERT [US] ET AL) 10. Oktober 2002 (2002-10-10) | 1-6,8,9 | INV. B29C48/92 |
| Y | * Absatz [0017] * | 7 | B29C45/76 |
| | * Absatz [0019] * | | B29C48/40 |
| | * Absatz [0021] * | | |
| | * Ansprüche 1-18 * | | |
| | * Abbildungen 1-5 * | | |
| | - - - - - | | |
| X | DE 10 2017 009046 A1 (REIFENHAEUSER MASCH [DE]) 28. März 2019 (2019-03-28) | 1-6,9 | |
| Y | * Absatz [0010] * | 7 | |
| | * Absatz [0037] * | | |
| | * Absatz [0050] * | | |
| | * Ansprüche 1-18 * | | |
| | * Abbildung 2 * | | |
| | - - - - - | | |
| X | EP 0 457 086 A2 (BAYER AG [DE]) 21. November 1991 (1991-11-21) | 1,2,4-6, 8,9 | |
| Y | * Ansprüche 1-6 * | 7 | |
| | * Absatz [0045]; Abbildungen 1-2 * | | |
| | * Ansprüche 1-15 * | | RECHERCHIERTE SACHGEBIETE (IPC) |
| | * Abbildungen 1-12 * | | |
| | - - - - - | | B29C |
| X | EP 2 673 594 B1 (BALLUFF GMBH [DE]) 3. Februar 2016 (2016-02-03) | 9 | |
| Y | * Absatz [0044] * | 7 | |
| | - - - - - | | |
| X | US 5 591 925 A (GARSHELIS IVAN J [US]) 7. Januar 1997 (1997-01-07) | 9 | |
| | * Ansprüche 1-38 * | | |
| | * Abbildungen 1-25 * | | |
| | - - - - - | | |

Der vorliegende Recherchenbericht wurde für alle Patentansprüche erstellt

| Recherchenort | Abschlußdatum der Recherche | Prüfer |
|---|---|---|
| München | 4. Juni 2025 | Ngwa, Walters |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 15 0272

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-06-2025

| Im Recherchenbericht angeführtes Patentdokument | Datum der Veröffentlichung | Mitglied(er) der Patentfamilie | | Datum der Veröffentlichung |
|---|---|---|---|---|
| US 2002146475 A1 | 10-10-2002 | KEINE | | |
| DE 102017009046 A1 | 28-03-2019 | KEINE | | |
| EP 0457086 A2 | 21-11-1991 | DE | 4015295 A1 | 14-11-1991 |
| | | EP | 0457086 A2 | 21-11-1991 |
| EP 2673594 B1 | 03-02-2016 | DK | 2673594 T3 | 18-04-2016 |
| | | EP | 2673594 A1 | 18-12-2013 |
| | | WO | 2012107006 A1 | 16-08-2012 |
| US 5591925 A | 07-01-1997 | AT | E192570 T1 | 15-05-2000 |
| | | CA | 2213657 A1 | 29-08-1996 |
| | | DE | 69608100 T2 | 15-02-2001 |
| | | EP | 0829001 A1 | 18-03-1998 |
| | | JP | 2992351 B2 | 20-12-1999 |
| | | JP | H10513267 A | 15-12-1998 |
| | | US | 5591925 A | 07-01-1997 |
| | | US | 5708216 A | 13-01-1998 |
| | | WO | 9626420 A1 | 29-08-1996 |

EPO FORM P0461

Für nähere Einzelheiten zu diesem Anhang : siehe Amtsblatt des Europäischen Patentamts, Nr.12/82